# EUROPEAN PATENT APPLICATION

(11) **EP 4 567 637 A1**
(43) Date of publication of application: **11.06.2025**
(21) Application number: 23214142.4
(22) Date of filing: 05.12.2023
(51) Int. Cl.: G06F 18/214, G06N 3/045, G06V 10/46, G06V 10/774, G06V 10/82, G06V 20/69

(54) **COMPUTER-IMPLEMENTED METHOD FOR DETECTING ONE OR MORE DEFINED GENOMIC ABERRATIONS FROM AN IMAGE OF A BODY LIQUID, BONE MARROW OF CYTOLOGY SMEAR SAMPLE**

(71) Applicant: Moonlight AI Sàrl, 2822 Courroux (CH)
(72) Inventor: Romano, Nicole, 4058 Basel (CH); Ruiz, Christian, 4058 Basel (CH)
(74) Representative: Longchamp, Jean-Nicolas

(57) **Abstract**

The present invention concerns a computer-implemented method for detecting one or more defined genomic aberrations from an image of a body liquid, bone marrow or cytology smear sample, in particular a blood smear sample.

## Description

### Technical Field

The present invention concerns the field of genomic aberration detection by computer-implemented detection methods. In particular, the present method concerns the detection of genomic aberration from an image of a body liquid, blood, bone marrow or cytology sample mounted on a slide, in particular a whole slide image of a blood smear sample.

### Background of the invention

Genomic aberrations refer to alterations in the DNA sequence or structure, which may involve deletions, duplications, inversions, translocations, gene fusions or point mutations. Such aberrations can have various consequences at the cellular level, manifesting as functional abnormalities, structural disorganization, or uncontrolled proliferation. These aberrations are of particular concern in oncology, where they can serve as biomarkers for cancer diagnosis, prognosis, and targeted therapy.

Traditional methods for detecting genomic aberrations include fluorescent in-situ hybridization (FISH), comparative genomic hybridization (CGH), real-time polymerase chain reaction (PCR), microarray-based technologies, such as SNP microarrays and Array-CGH, and sequencing technologies, such as next-generation sequencing (NGS) or Sanger sequencing. While these methods offer varying degrees of sensitivity and specificity, they are often limited by their complexity, cost, and time-consumption. Furthermore, the analyses usually involve extensive sample processing on expensive equipment and require specialized expertise, making them less accessible for routine clinical applications.

The particular appearance of cells in a sample is a reflection of their genomic integrity. Aberrations can lead to atypical cellular morphology, including irregular nuclei, changes in cytoplasm granulation, abnormal chromatin distribution, and changes in cell size or shape. These resulting features are commonly analysed in morphological cytological examinations under the microscope but usually require subjective interpretation by highly trained professionals. Furthermore, the exact link between a genomic aberration and changes in cell morphology is rarely well-characterized. Accordingly, a computer-implemented method that can objectively and reliably detect such changes would constitute a significant advance in the field.

Existing computer-assisted methods largely comprise machine learning algorithms or heuristic rules to analyse sequencing data that results from the extraction and processing of DNA from patient tissue samples. However, these approaches generally require access to expensive, specialized laboratory equipment and involve time-intensive processing of precious patient tissue samples. Therefore, there remains a need for a more streamlined, time-efficient, and cost-effective method for detecting genomic aberrations. There exist moreover, in the state-of-the-art, visually-based computer-implemented methods for the classification of solid tissue samples as comprising or not one or more genomic aberration. These methods are advantageous in their nondestructive use of slide-mounted solid tissue samples that are made available in the standard clinical workflow. Unfortunately, the said methods cannot be applied to samples of body liquids, as the multicellular architecture, or lack thereof, as well as prevalence and spatial distribution of evaluable cells differs greatly in liquid samples. For example, while solid tissue cancer cells typically aggregate in contiguous regions, cells from a blood sample are dispersed and distributed randomly across the slide. Further, in samples from body liquids, the cells bearing the genomic aberrations can be as rare as 1:1000, as is the ratio of lymphocytes to red blood cells in the blood of leukemia patients. This different cell distribution between solid tissue cancer and body liquid samples is also reflected in the used digitization procedures: whereas solid tissue sample slides are generally digitized with a whole slide image scanner, blood sample slides are digitized with hematology morphology analyzers, such as CellaVision or Vision Hema that search, detect and photography a limited number of single cells of interest, e.g., lymphocytes [Kratz, A., Lee, S., Zini, G., et al.: Digital morphology analyzers in hematology: ICSH review and recommendations. International Journal of Laboratory Hematology (2019). ]. The state of the art lacks a solution that can scale to the thousands of cells required to detect rare morphologies of interest while maintaining the single-cell approach that is most advantageous for liquid samples.

Liquid samples are however important for the detection of the presence of genomic aberrations that can be linked to specific diseases or pathologies, as well as for the monitoring of the tumour over the course of treatment. For instance, detection of the driver mutation TP53 is of primordial importance, being both prognostic for the aggressiveness of the tumor and predictive of the patient's response to treatment.

By addressing these gaps and limitations in the state of the art, the present invention aims to offer a novel solution that enhances the speed, cost, and automation of genomic aberration detection in samples from body liquids, thereby advancing the standard of care in genomic diagnostics and personalized medicine.

### Summary of the invention

Thus, the object of the present invention is to propose a novel computer-implement method, with which the above-described drawbacks of the known methods are completely overcome or at least greatly diminished.

According to the present invention, these objects are achieved in particular through the elements of the independent claim. Further advantageous embodiments follow moreover from the dependent claims and the description.

In particular, the objects of the present invention are achieved by a computer-implemented method for detecting one or more defined genomic aberrations from an image of a body liquid, bone marrow of cytology smear sample, in particular a blood smear sample, comprising the following steps:
a. Segment at least a part of a whole slide image of the smear sample into single-cell images, advantageously by means of a first trained convolutional deep neural network;
b. Embed each single-cell image into a feature vector by means of a second trained neural network, advantageously a trained convolutional neural network or a trained transformer neural network;
c. Define at least one bag of feature vectors representative for the sample;
d. Derive from the at least one bag of feature vectors a bag value by means of an attention-based Multiple Instance Learning third trained neural network, wherein from the bag value the at least one bag of feature vectors is labelled as indicative or non-indicative for the defined genomic aberration;
e. Classify the sample as indicative of the one or more defined genomic aberrations when an indicative value dependent on the number of bags of feature vectors labelled as indicative meets or exceeds a predetermined threshold value.

Thanks to this method, it is possible to reliably and automatically detect the presence of one more genomic aberration in whole slide images (WSI) of liquid samples containing cells.

It is important to note that the image segmentation step could also be accomplished by non-neural methods such as thresholding, region-based, or boundary/edge-based methods. Alternatively, the single-cell images could be acquired by a hematology morphology analyzer, which digitizes part or all of the slide and segments individual cells in a single workflow. The first convolutional neural network was advantageously trained to perform pixel-level segmentation of cells, is fed with image tiles from the whole slide image, and outputs an image patch for each identified object (cell). Furthermore, the first network advantageously outputs information about the location of each identified cell in the WSI.

The first neural network is advantageously a pre-trained model from the StarDist python library [Uwe Schmidt, Martin Weigert, Coleman Broaddus, and Gene Myers. Cell Detection with Star-convex Polygons. International Conference on Medical Image Computing and Computer-Assisted Intervention (MICCAI), Granada, Spain, September 2018.] made available by QuPath [Bankhead, P. et al. QuPath: Open source software for digital pathology image analysis. Scientific Reports (2017).]. The model comprises a U-Net architecture [Ronneberger, O., Fischer, P., Brox, T.: U-net: Convolutional networks for biomedical image segmentation. In: MICCAI (2015)] followed by Non-Maximum Suppression to identify probable objects. The model was trained on Hematoxylin & Eosin-stained cell images from three sources:
1. Data Science Bowl 2018 dataset BBBC038 provided by the Broad Institute [https://bbbc.broadinstitute.org/BBBC038]
2. MoNuSeg Grand Challenge 2018 dataset [https://monuseg.grand-challenge.org/Data/]
3. TNBC dataset from Naylor, et al. 2018 [https://zenodo.org/records/2579118].

Future embodiments of the first neural network could advantageously be trained on images of blood, bone marrow, or other cells in a liquid environment, stained with sample-appropriate solutions, for example: May-Grünwald-Giemsa staining for blood or Papanicolau staining for cytology samples.

In a second step, each single-cell image is embedded into a feature vector by means of a second trained neural network. The second neural network advantageously operates on unannotated single-cell images and was trained on over 49 million single-cell images derived from 63 blood smears from unique patients. Each single-cell image was subjected to a set of pre-defined transformations, in order to train the model to maximize the distance between feature vectors stemming from different cells while minimizing the distance between feature vectors from the same cell (contrastive learning). The second neural network has thus advantageously undergone a self-supervised learning. While a self-supervised learning is favoured, the second neural network can also undergo an unsupervised learning. The second neural network is furthermore advantageously trained to create a rotationally invariant embedding of the single-cell images, and its output is validated by further dimensionality reduction and visualization in a 2-dimensional plane. It is important to note that, because the second neural network is not trained with a specific purpose in mind (for extracting a specific feature), the extracted feature vectors can be used for a variety of third classifier/regressor models downstream. Furthermore, the feature vectors representing cells can be aggregated to form a representation of all or part of the liquid sample for a variety of tasks downstream, such as efficient comparison of liquid samples across patient populations or monitoring liquid samples from a single patient over time.

Optionally, a step of instance-level augmentation to increase the diversity of the training data for the training of the second neural network, such as rotation, flipping, zooming, color variation, and synthetic background generation, among others on the single-cell images can be applied. Furthermore, an optional step of pre-processing of the single-cell images, for instance color normalization, Gaussian smoothing, style transfer, or background removal, can be foreseen.

In step c., at least one bag of feature vectors representative for the sample is defined. The number of bags per sample can be advantageously from 1 to 10 but could also be more than 10. The bag size can be from hundreds of cells to millions of cells. The label, indicating genomic status of the patient, is transferred from the whole slide image to the bag.

The minimum bag size can be calculated from the detection limit of the ground truth, the best possible detection limit of the model, and the yield of the segmentation step.

Before defining the bag in step c., an optional step of feature vector normalization can be applied. This has the advantage of ensuring features within the vector have a similar scale, as well as reducing the risk of so-called vanishing and exploding gradients during back-propagation. A further optional step of classifying the feature vectors to belong to defined cell types can be foreseen. In this case, a subset of feature vectors can be selected and the at least one bag defined in step c. comprises only feature vectors of this subset.

The third network can have an output head that is a regressor or a classifier. In case of a classifier, the output of the network is thresholded to produce a binary value, a one or zero as indication of the presence of the one or more genomic aberrations in the bag. In case of a regressor, the output of the network is a continuous value. This value can be compared to a predetermined threshold value for determining the label of the bag, or to a previous value in order to determine growth of the aberration-carrying cell population in the tumor. In both cases, the network is advantageously a multi-layer perceptron with an attention mechanism that operates on the principle of multiple-instance learning.

For the training of the third neural network, the identity of each bag can be either immutable or mutable with each epoch (bags can be created freshly each epoch), and one or more bags can be used in each epoch. Important to note is that for the training of the third neural network, the bags do not need to be comprised of feature vectors from a single sample, as long as the label stays known, and the number of positive features vectors stays above the detection limit of the model. For example, if the detection limit of the model is 20% and the ground truth says 80% of cells have a biomarker, up to 80%-20% = 60% of cells could be replaced with cells from a different sample, whether positive or negative in genomic status.

Finally in step e., the sample is classified as indicative of the one or more defined genomic aberrations when an indicative value dependent on the number of bags of feature vectors labelled as indicative meets or exceeds a predetermined threshold value. Important note is that the number of bags can be one, in particular when the size of the bag is chosen such that the bag is for sure relevant for the sample; meaning that the bag and the sample can only have the same label.

Advantageously, the indicative value is the percentage of bags of feature vectors labelled as indicative.

In a first preferred embodiment of the present invention, attention weights obtained from the third neural network are used to label the at least one bag of feature vectors as indicative or non-indicative for the one or more defined genomic aberrations. The attention weights sum to one, allowing for a reliable prediction of the presence of the one or more generic aberrations independently on the number of instances (feature vectors) in the bag. Advantageously, the attention weights are pooled by a learned pooling function to label the at least one bag of feature vectors as indicative or non-indicative for the one or more defined genomic aberrations. The learned pooling function allows uninformative instances to be weighed less heavily, and the function is designed to be symmetric to be invariant to permutation of instances in the bag.

In another preferred embodiment of the present invention, the method further comprises a step of labelling at least a part of the single-cell images corresponding to the feature vectors of the bag as indicative or non-indicative of the one or more defined genomic aberrations by the third neural network. This allows prediction on the single-cell level for each cell of the bag and to identify which cell shows the one or more genomic aberration.

In a further preferred embodiment of the present invention, the method comprises generating a heat-map of the labelled cells present within the at least part of a whole slide image, said heat-map being produced based on spatial location data for each of said labelled cells, as outputted by the first neural network. This allows for identifying on the original whole slide image the presence and position of cells showing the one or more genomic aberration.

In yet another preferred embodiment of the present invention, the second neural network has been trained by self-supervised learning on single-cell images derived from whole slide images of smear samples that have undergone a defined set of transformations, wherein the second neural network maximizes the spatial distance between feature vectors stemming from different cells and minimize the spatial distance between feature vectors stemming from the same cell. This allows for an optimal training of the second neural network and downstream an optimal detection of the presence of the one or more genomic aberration in the sample.

In a further preferred embodiment of the present invention, the method further comprises between step a. and b. or before step a. a pre-processing step for the single-cell images, as for example color normalization or Gaussian smoothing. This has the advantage of reducing uninformative variation present in images due to batch effects during sample preparation or slide digitization. Furthermore, between steps c. and d. a normalization step of the feature vectors is advantageously provided. This has the advantage of ensuring features within the vector have a similar scale, as well as reducing the risk of so-called vanishing and exploding gradients during back-propagation.

In another preferred embodiment of the present invention, the method comprises between steps c. and d. a step of classifying the single-cell images into cell-types and wherein the bag of feature vectors comprises only feature vectors corresponding to one cell-type. This allows to detect the presence of the one or more genomic aberration on only one type of cells. For instance, in the evaluation of peripheral blood samples it may be desired to analyze only cells having a nucleus, such as leukocytes.

In yet another preferred embodiment of the present invention, the method comprises a step of generating a sub-cellular heat map for indicating the pixel-level position of any shape or texture changes in the cell resulting from the one or more aberrations in the single-cell images. Advantageously, the value of the heatmap is connecting them to a user interface where an expert can look for patterns in the detected cell morphology, either validating known morphological changes or hypothesizing new ones linked to genomic aberrations.

In another preferred embodiment, the method further comprises a step of bag-level augmentation. This allows for an optimal training of the third neural network without having to acquire a large number of whole slide images. The bag-level augmentation can comprise for instance bag subsampling (random selection of a subset of instances from the bag to create a new bag, while the label of the new bag remains the same as the original bag), bag merging (combination of instances from two or more bags to create a new bag, while the label of the new bag is typically decided based on some logical operation (e.g., AND, OR) applied to the labels of the original bags), instance transformation (applying instance-level transformations (e.g., flipping, rotating) to every instance in the bag), noise addition (addition of some form of noise to the instances within the bag, as for instance Gaussian noise) or feature-level augmentation (modification of the feature vectors in the bag in a manner consistent across all instances).

Advantageously, the size of the at least one bag is given by the detection limit of the ground truth and the segmentation step is performed on a whole slide image of the sample.

According to a second aspect, the present invention relates to a computer program product comprising instructions which, when the program is executed by a computer, cause the computer to carry out the method of the present invention.

According to a third aspect, the present invention relates to a device or system comprising means for carrying out the method of the present invention.

According to a fourth aspect, the present invention relates to a computer-readable storage medium comprising instructions which, when executed by a computer, cause the computer to carry out the method of the present invention.

In a further aspect, the present invention relates to a method for training a neural network, advantageously an attention-based Multiple Instance Learning network, for deriving from a bag of feature vectors a bag value, wherein from the bag value the at least one bag of feature vectors can be labelled as indicative or non-indicative for the defined genomic aberration. For the training of this neural network, at least parts of whole slide images of smear samples are segmented into single-cell images, advantageously by means of a first trained neural network, wherein the sample are either positive (comprising one or more of genomic aberration) or negative. Each single-cell image is then embedded into a feature vector by means of a second trained neural network, advantageously a trained convolutional neural network or a trained transformer neural network. Subsequently, bags of feature vectors representative of the samples are defined and inputted to the third neural network and the network is trained until it can produce a bag value from which the presence of the genomic aberration in the bag can be derived.

In a further aspect, the present invention relates to a method for training a neural network for embedding single-cell images into feature vectors. The network is trained by self-supervised learning on single-cell images derived from whole slide images of smear samples that have undergone defined set of transformations, wherein the second neural network maximizes the spatial distance between feature vectors stemming from different cells and minimize the spatial distance between feature vectors stemming from the same cell.

In a further aspect, the present invention relates to a method for detecting the presence of a biomarker in a smear sample. In this method, the presence of a specific genomic aberration is detected by the present invention and a step of associating the presence of the biomarker associated to this genomic aberration is provided.

In a further aspect, the present invention relates to a method for diagnosing a disease associated to a specific biomarker.

In a further aspect, the present invention relates to a method for monitoring or prognosing the evolution of a disease, wherein the computer-implemented method of the present invention is applied on samples of a patient acquired at different point in times, and a prognostic is derived from the evolution of the number of cells showing one or more genomic aberrations.

Finally, in a further aspect, the present invention relates to a method for creating a virtual sample for a patient that can be analysed again and again to detect different biomarkers and/or to diagnose different disease or pathology. As a whole slide image typically comprises thousands to millions of cells, the virtual sample comprises as many feature vectors that can be filtered according to computer metadata, for instance a predicted cell type, for downstream use. The virtual samples can be used for on-demand virtual molecular testing for any number of other biomarkers, cell counts, etc, as needed in the treatment journey of a patient. This method comprises the steps of segmenting at least a part of a whole slide image of a smear sample of a patient into single-cell images, advantageously by means of a first trained convolutional deep neural network and of embedding each single-cell image into a feature vector by means of a second trained neural network, advantageously a trained convolutional neural network or a trained transformer neural network.

### Brief description of the drawings

- Figure 1 shows the workflow of a preferred embodiment of the present invention;
- Figure 2 shows an example of a whole slide image of a blood smear sample;
- Figure 3 shows examples of segmented single-cell images;
- Figure 4 shows for a selection of single-cell images their corresponding feature vectors and their attention scores;
- Figure 5 illustrates pre-defined transformations that were applied to single-cell images;
- Figure 6 shows the performance of the method on a test set of samples; and
- Figures 7 and 8 illustrate the Receiver Operating Characteristic (ROC) curve for two implementations of the method.

### Detailed description of a preferred embodiment

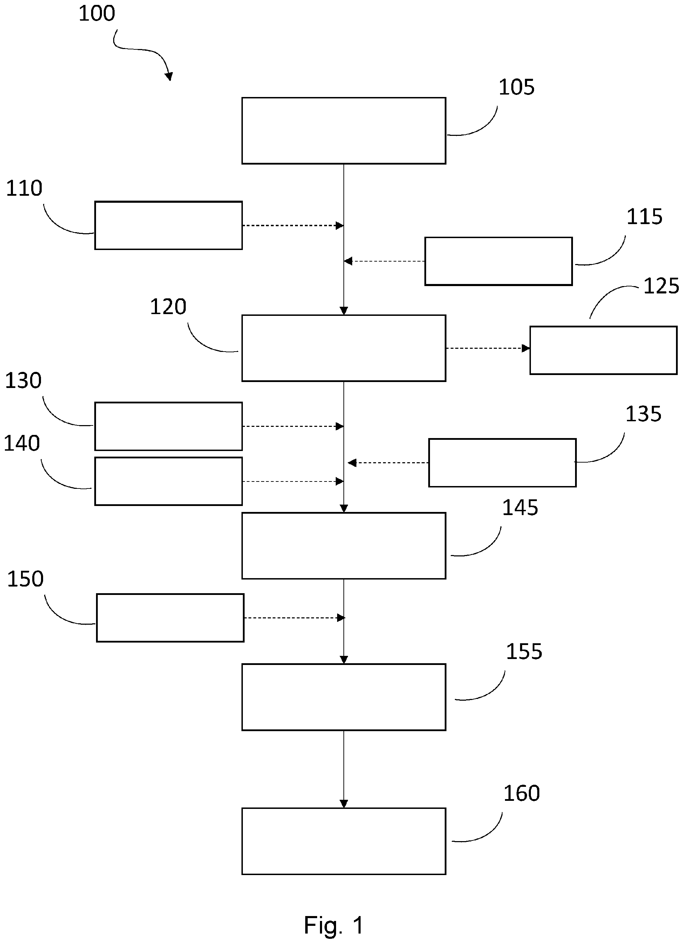

A preferred embodiment of the method of the present invention is presented in figure 1 and results of the method are presented in the other figures.

Figure 1 illustrates the workflow of a preferred embodiment 100 of the method of the present invention. Solid arrows illustrate the step comprised in this embodiment while dashed arrows represent optional further steps.

Method 100 comprises a first step 105 where a whole slide image (WSI) of a blood smear sample is segmented by means of a first trained convolutional neural network into single-cell images. It is important to note that the image segmentation step could also be accomplished by non-neural methods in such as thresholding, region-based, or boundary/edge-based methods.

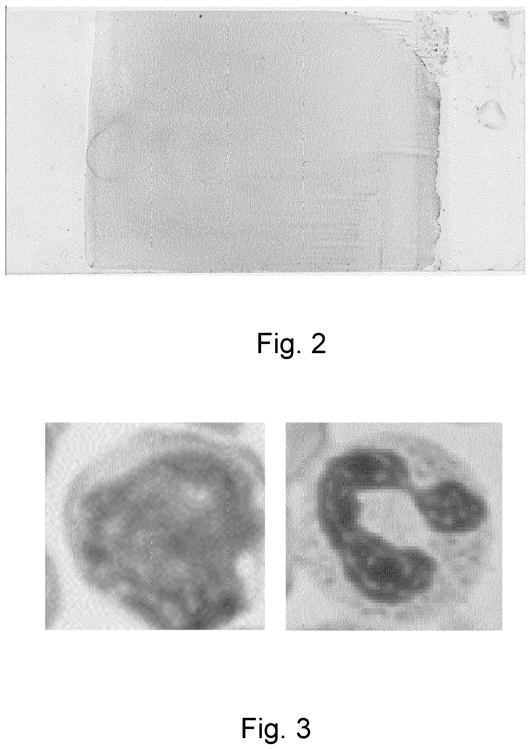

Figure 2 shows an example of an actual blood smear sample and Figure 3 shows two examples of such single-cell images.

The first convolutional neural network was trained to perform pixel-level segmentation of cells and is fed with images of tiles from the whole slide image, and outputs an image patch for each identified object (cell). Furthermore, the first network also advantageously outputs information about the location of each identified cell in the WSI. The whole slide images were created by using a Olympus VS200 slide scanner equipped with an automated oil dispenser. After automated application of oil on to the slide, slides were scanned with a 50x oil immersion lens. Three z layers with a 5 micron spacing between them were recorded. The layer with the highest-quality focus was chosen for training and/or inference.

The first neural network is a pre-trained model from the StarDist python library [Uwe Schmidt, Martin Weigert, Coleman Broaddus, and Gene Myers. Cell Detection with Star-convex Polygons. International Conference on Medical Image Computing and Computer-Assisted Intervention (MICCAI), Granada, Spain, September 2018.] made available by QuPath [Bankhead, P. et al. QuPath: Open source software for digital pathology image analysis. Scientific Reports (2017).]. The model, he_heavy_augment.pb, comprises a U-Net architecture [Ronneberger, O., Fischer, P., Brox, T.: U-net: Convolutional networks for biomedical image segmentation. In: MICCAI (2015)] followed by Non-Maximum Suppression to identify probable objects. The model was trained on Hematoxylin & Eosin-stained cell images from three sources:
4. Data Science Bowl 2018 dataset BBBC038 provided by the Broad Institute [https://bbbc.broadinstitute.org/BBBC038]
5. MoNuSeg Grand Challenge 2018 dataset [https://monuseg.grand-challenge.org/Data/]
6. TNBC dataset from Naylor, et al. 2018 [https://zenodo.org/records/2579118].

Future embodiments of the first neural network could advantageously be trained on images of blood, bone marrow, or other cells in a liquid environment, stained with sample-appropriate solutions, for example: May-Grünwald-Giemsa staining for blood or Papanicolau staining for cytology samples.

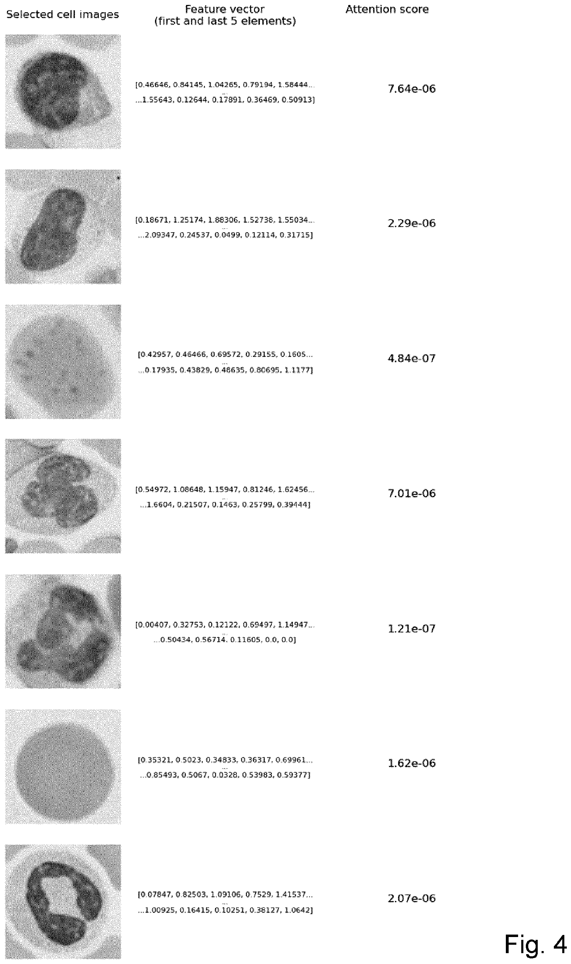

In a second step 120, each single-cell image is embedded into a feature vector by means of a second trained convolutional neural network. Examples of embedded vectors are illustrated in Figure 4 for selected single cell images, wherein only the first five and last five components of the vectors are shown as the vectors have a dimension of 2048. It is important to note that this embedding step can also be performed by transform-based neural network. In either case, the second neural network operates on unannotated single-cell images and was trained on single-cell images that have undergone a set of pre-defined transformations, in order to maximize the distance between feature vectors stemming from different cells while minimizing the distance between feature vectors from the same cell (contrastive learning). The second neural network has thus undergone a self-supervised learning. While a self-supervised learning was favoured in this preferred embodiment, the second neural network could have also undergone an unsupervised learning. In the present preferred embodiment, the second neural network was furthermore advantageously trained to promote a rotationally invariant embedding of the single-cell images. Moreover, because the second neural network was not trained with a specific purpose in mind (for extracting a specific feature), the extracted feature vectors can be used for a variety of third classifier/regressor models downstream.

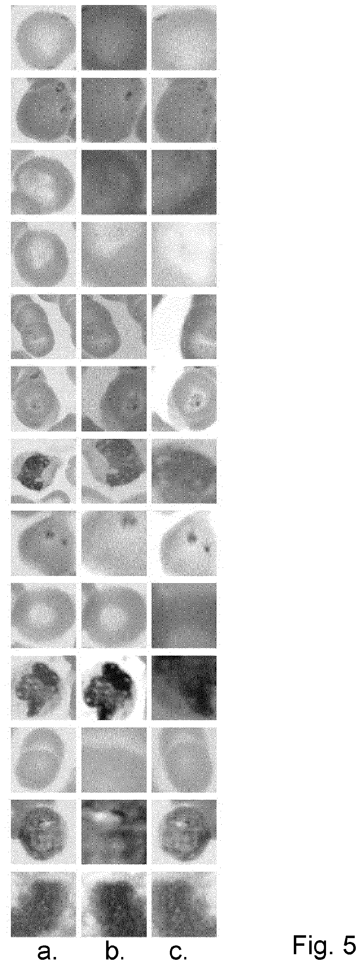

Figure 5 shows examples of pre-defined transformations that were applied to single-cell images to train the second neural network. In this figure, the columns a, b and c show the same cell image having undergone transformations.

Optionally, a step 110 of instance-level augmentation to increase the diversity of the training data for the training of the second neural network, such as rotation, flipping, zooming, color variation, and synthetic background generation, among others on the single-cell images can be applied. Furthermore, an optional step 115 of pre-processing of the single-cell images, for instance color normalization, Gaussian smoothing, or background removal can be foreseen.

It is important to note, that part or the entirety of the feature vectors resulting of step 120 can be stored for further analysis. Indeed, the feature vectors form a virtual patient sample that can be analysed again and again to detect different biomarker and/or to diagnose different disease or pathology. As a WSI typically comprises thousands to millions of cells, the virtual sample comprises as many feature vectors that can be filtered according to computer metadata, for instance a predicted cell type, for downstream use. The virtual samples can be used for on-demand virtual molecular testing for any number of other biomarkers, cell counts, etc, as needed in the treatment journey of a patient. Since the second neural network was not trained with a specific purpose in mind, the extracted feature vectors can be used for a variety of third classifier/regressor models downstream.

In step 145, at least one bag of feature vectors representative for the sample is defined. The number of bags per sample can be advantageously from 1 to 10 but could also be more than 10. The bag size can be from thousands of cells to millions of cells.

The minimum bag size can be calculated from the detection limit of the ground truth, the best possible detection limit of the model, and the yield of the segmentation step. The model's theoretical best detection limit for a bag size of m feature vectors is 1/m, and the segmentation yield can be denoted Ys. If limit of detection of 10% is assumed, the minimum bag size is found by: 1/(m*Ys) >= 10%. On the other hand, the maximum bag size is maximally bounded by number of features that can fit in VRAM.

Before defining the bag in step 145, an optional step 130 of feature vector normalization can be applied. This has the advantage of ensuring features within the vector have a similar scale, as well as reducing the risk of so-called vanishing and exploding gradients during back-propagation. A further optional step 135 of classifying the feature vectors to belong to defined cell types can be foreseen. In this case, a subset of feature vectors can be selected in optional step 140 and the at least one bag in step defined in step 145 would only comprise feature vectors of this subset.

In step 155, an attention-based Multiple Instance Learning (MIL) third trained neural network is used to label the at least one bag of feature vectors defined in step 145 as indicative or non-indicative for the defined genomic aberration. The third network can be a regressor or a classifier. In case of a classifier, the output of the network is thresholded to produce a binary value, a one or zero as indication of the presence of the one or more genomic aberrations in the bag. In case of a regressor, the output of the network is a continuous value that can be compared to a predetermined threshold value for determining the label of the bag, or to a previous value in order to determine growth of the aberration-carrying cell population in the tumor. In both cases, the network is advantageously a multi-layer perceptron with an attention mechanism that operates on the principle of multiple-instance learning. The third network can by means of a pooling function produce single-cell predictions by inputting a bag containing only a single-cell, i.e., to make a prediction on the presence of one or more genetic aberration on that cell. The trainable pooling function (attention mechanism) is learned from the data (parametrized by a 2-layer neural network) and is independent of number of feature vectors in the bag (weights sum to one). It is advantageously formulated as a symmetric function to remove sequential dependence (is permutation-invariant with respect to cell order) and includes an activation function that is designed to highlight distinctions between positive and negative feature vectors. Advantageously, it includes a tanh activation function that is more expressive than a typical tanh activation by introducing non-linearity (gating function) interpretable by assigning weights to each feature vector in the bag according to how informative that feature vector is. Figure 4 shows in the third column an example of attention scores (weights) for selected single-cell images.

For the training of the third neural network, the identity of each bag can be either immutable or mutable with each epoch (bags can be created freshly each epoch), and one or more bags can be used in each epoch. Important to note that for the training of the third neural network, the bags do not need to be comprised of feature vectors from a single sample, as long as the label stays known, and the number of positive features vectors stays above the detection limit. For example, in the case of a classifier, if detection limit of the model is 20% and the ground truth says 80% of cells have a biomarker, up to 80%-20% = 60% of cells could be replaced with cells from a different sample, whether positive or negative in genomic status.

In order to efficiently train the third neural network, an optional step 150 of bag-level augmentation can be foreseen. The bag-level augmentation can comprise for instance bag subsampling (random selection of a subset of instances from the bag to create a new bag, while the label of the new bag remains the same as the original bag), bag merging (combination of instances from two or more bags to create a new bag, while the label of the new bag is typically decided based on some logical operation (e.g., AND, OR) applied to the labels of the original bags), instance transformation (applying instance-level transformations (e.g., flipping, rotating) to every instance in the bag), noise addition (addition of some form of noise to the instances within the bag, as for instance Gaussian noise) or feature-level augmentation (modification of the feature vectors in the bag in a manner consistent across all instances).

Finally in step 160, the sample is classified as indicative of the one or more defined genomic aberrations when an indicative value dependent on the number of bags of feature vectors labelled as indicative meets or exceeds a predetermined threshold value. Important note is that the number of bags can be one, in particular when the size of the bag is chosen such that the bag is for sure relevant for the sample; meaning that the bag and the sample can only have the same label.

As mentioned above, the third network can be used to make single-cell prediction on the presence of one or more genomic aberration on each cell. This information combined with information on the localization of each map that can be outputted by the first network allows for the creation of a heat map that overlies the single-cell prediction on the original whole slide image.

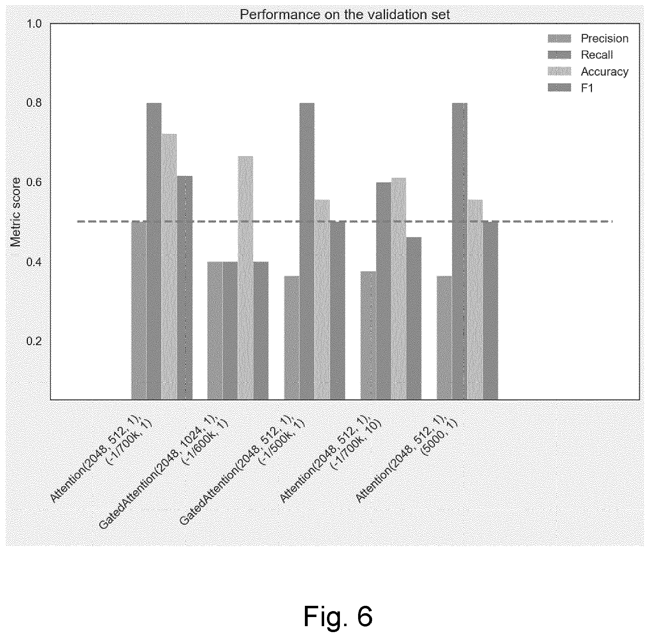

The method described for the present invention was tested for the detection of genomic aberration due to the presence of the TP53+ biomarker that is important to prognosis and the selection of therapeutic strategy for patients with chronic lymphocytic leukaemia. The third neural network was trained on a sample set including 34 TP53-negative and 10 TP53-positive samples. Figure 6 shows the performance of the method on a test set of samples not seen during model training that included 13 negative and 5 positive samples. The graph shows the performance of this method in avoiding false negative errors, i.e. precision (true positives divided by true positives plus false positives); in identifying patients with the genomic aberration, i.e. recall (true positives divided by true positives plus false negatives); in the rate of correct classification, i.e. accuracy (correct predictions divided by total number of predictions), and in class distribution-adjusted accuracy, i.e. F1-score (twice the product of precision and recall divided by the sum of precision and recall). As one can see, the present method is better than random classification of the samples and achieves a sensitivity value (number of true positives divided by the sum of the number true positives and false negatives) of 0.8, a specificity value (number of true negatives divided by the sum of number of true negatives plus false positives) of 0.69, an accuracy value (sum of true positives plus true negatives divided by the sum of true positives plus false positives plus true negatives plus false negatives) of 0.72. This means that thanks to the present invention 80% of the positive samples (patients) could be identified while saving state of the art molecular tests for 69% of patients who do not have the aberration.

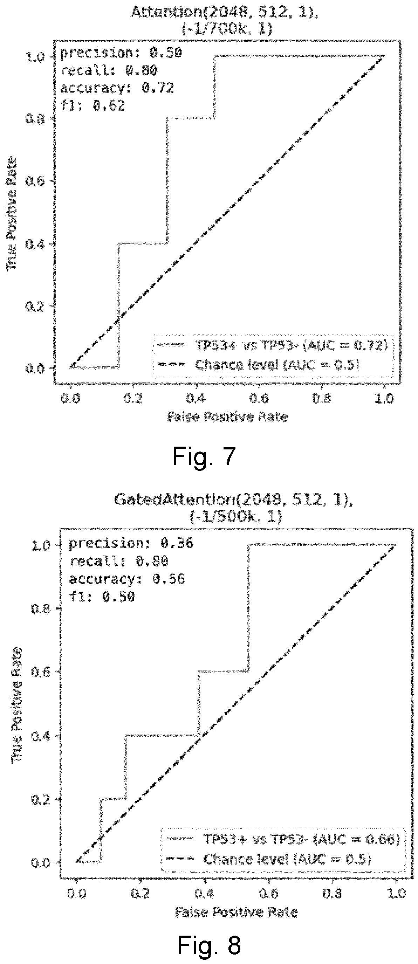

Figures 7 and 8 illustrate the Receiver Operating Characteristic (ROC) curve for two implementations of the method. The ROC curve plots the True Positive rate against the False Positive rate. An Area Under the Curve (AUC) greater than 0.5 indicates a model is better than random, and models with an AUC close to 1 are highly performant. The attention mechanism referenced in Figure 7 comprises a linear combination of learned weights subjected to a non-linear activation function such as the hyperbolic tangent (tanh). In Figure 8, the gated attention mechanism includes an additional non-linearity that gates the flow of information. The amount of information flowing through each activation neuron is gated according to the sigmoid distribution bounded by [0,1]. This additional nonlinearity is designed to further improve the expressiveness of the attention pooling function due to the linearity of the tanh activation function between the values of 0 and 1.

The tests were performed on an Nvidia Tesla V100 GPU with 16 GB HBM2 GPU memory.

## Claims

1. Computer-implemented method for detecting one or more defined genomic aberrations from an image of a body liquid, bone marrow or cytology smear sample, in particular a blood smear sample, comprising the following steps:
a. Segment at least a part of a whole slide image of the smear sample into single-cell images, advantageously by means of a first trained convolutional deep neural network;
b. Embed each single-cell image into a feature vector by means of a second trained neural network, advantageously a trained convolutional neural network or a trained transformer neural network;
c. Define at least one bag of feature vectors representative for the sample;
d. Derive from the at least one bag of feature vectors a bag value by means of an attention-based Multiple Instance Learning third trained neural network, wherein from the bag value the at least one bag of feature vectors is labelled as indicative or non-indicative for the defined genomic aberration;
e. Classify the sample as indicative of the one or more defined genomic aberrations when an indicative value dependent on the number of bags of feature vectors labelled as indicative meets or exceeds a predetermined threshold value.

2. Computer-implemented method according to claim 1,
wherein attention weights obtained from the third neural network are used to label the at least one bag of feature vectors as indicative or non-indicative for the one or more defined genomic aberrations.

3. Computer-implemented method according to claim 2,
wherein the attention weights are pooled by a trained pooling function to label the at least one bag of feature vectors as indicative or non-indicative for the one or more defined genomic aberrations.

4. Computer-implement method according to any one of the preceding claims, further comprising a step of labelling at least a part of the single-cell images corresponding to the feature vectors of the bag as indicative or non-indicative of the one or more defined genomic aberrations by the third neural network.

5. Computer-implemented method according to claim 4,
wherein the method comprises generating a heat-map of the labelled cells present within the at least part of a whole slide image, said heat-map being produced based on spatial location data for each of said labelled cells, as outputted by the first neural network.

6. Computer-implemented method according to any one of the preceding claims, wherein the second neural network has been trained by self-supervised learning on single-cell images derived from whole slide images of smear samples that have undergone defined set of transformations, wherein the second neural network maximizes the spatial distance between feature vectors stemming from different cells and minimize the spatial distance between feature vectors stemming from the same cell.

7. Computer-implemented method according to any one of the preceding claims, further comprising between step a. and b. or before step a. a pre-processing step for the single-cell images, as for example color normalization or Gaussian smoothing.

8. Computer-implemented method according to any one of the preceding claims comprising between steps c. and d. a normalization step of the feature vectors.

9. Computer-implemented method according to any one of the preceding claims, wherein the method comprises between steps c. and d. a step of classifying the single-cell images into cell-types and wherein the bag of feature vectors comprises only feature vectors corresponding to one cell-type.

10. Computer-implemented Method according to any one of the preceding claims wherein the indicative value is the percentage of bags of feature vectors labelled as indicative.

11. Computer-implemented Method according to any of the preceding claims further comprising a step of generating a sub-cellular heat map for indicating the pixel-level position of any shape or texture changes in the cell resulting from the one or more aberrations in the single-cell images.

12. Computer-implemented Method according to any one of the preceding claims further comprising a step of bag-level augmentation.

13. Computer-implemented Method according to any one of the preceding claims, wherein the size of the at least one bag is given by the detection limit of the ground truth.

14. Computer-implemented Method according to any one of the preceding claims, wherein the segmentation step is performed on a whole slide image of the sample.
